# EUROPEAN PATENT APPLICATION

(11) **EP 3 190 712 A1**
(43) Date of publication of application: **12.07.2017**
(21) Application number: 16190301.8
(22) Date of filing: 23.09.2016
(51) Int. Cl.: H04B 1/38, H04B 1/3822

(54) **WIRELESS COMMUNICATION SYSTEM FOR HELMETS**

(30) Priority: 06.01.2016 TW 105200102 U
(71) Applicant: Jarvish Inc., Taipei City (TW)
(72) Inventor: Younger, Liang, (R.O.C.) Taipei City (TW)
(74) Representative: Klemm, Rolf

(57) **Abstract**

A wireless communication system for helmets (1) comprises a plurality of helmet bodies (10) and a plurality of wireless communication devices (20) disposed on the helmet bodies (10). The relay unit (201) of one of the wireless communication devices (20) broadcasts a communication request signal using multihop transmission to a broadcast object through the relay units (201) of the other wireless communication devices (20) within a nearby communication range. Thus, the communication effect can be achieved through the multihop transmission.

## Description

This application claims the priority benefit of Taiwan patent application number 105200102 filed on January 6, 2016.

### BACKGROUND OF THE INVENTION

### Field of the Invention

The present invention relates to a wireless communication system and in particular to a wireless communication system for helmets, which achieves the transmission and communication through the multihop transmission.

### Description of Prior Art

Due to the fast development of modem technology, the motorcycle has become one of indispensable vehicles and thus the helmet is safety equipment for people to ride the motorcycle. When riding the motorcycle, the driver often wants to have a talk or a chat with the rear passenger. However, the wind noise caused by the motorcycle movement always makes the talk of the rear passenger unclear. Even to hear more clearly, the driver looks backwards and becomes careless about the situation in front of the motorcycle, which easily results in an accident. Therefore, a helmet having a short-distance communication function has been developed, which allows the driver to establish communication with the rear passenger using Bluetooth communication.

However, the above-mentioned traditional helmet is limited to a short-distance communication between the driver and the rear passenger, but cannot be extended to a communication or a chat between another driver or another rear passenger. Consequently, the prior art cannot achieve the effect of long-distance communication.

In view of this, the inventor pays special attention to research with the application of related theory and tries to improve and overcome the above disadvantages regarding the above related art, which becomes the improvement target of the inventor.

### SUMMARY OF THE INVENTION

Thus, to effectively overcome the above problems, the primary objective of the present invention is to provide a wireless communication system for helmets to achieve the effect of communication through the multihop transmission.

Another objective of the present invention is to provide a wireless communication system for helmets, which can achieve a long-distance communication.

Yet another objective of the present invention is to provide a wireless communication system for helmets, which makes the user have convenient communication.

To achieve the above objectives, the present invention provides a wireless communication system for helmets, which comprises a plurality of helmet bodies and a plurality of wireless communication devices which are disposed on the helmet bodies. Each of the wireless communication devices has a relay unit, a communication unit, and a processing unit. The communication unit is connected to the relay unit and the processing unit. The communication unit receives and sends a communication request signal containing a piece of version information and a piece of related information through the relay unit. One of the processing units operates based on the received piece of related information and the corresponding piece of version information to generate the communication request signal sent to the corresponding communication unit. Each of the other processing units compares the piece of version information of the received communication request signal sent by the one of the processing units with the piece of version information of its own to determine whether an update process is performed and sends the received communication request signal to the corresponding communication unit. The relay unit of one of the wireless communication devices broadcasts the communication request signal using multihop transmission to a broadcast object through the relay units of the other wireless communication devices within a nearby communication range and recognizes the broadcast object is a specific wireless communication device or the whole of the wireless communication devices based on the piece of version information of the received communication request signal such that the broadcast object obtains the communication request signal and thus achieves the long-distance communication effect.

In an embodiment, each of the wireless communication devices further has an audio receiver and a playing unit. The processing units are individually connected to the corresponding audio receivers and the corresponding playing units. The audio receiver is used to receive a voice message and the playing unit is used to play the voice message.

In an embodiment, the piece of version information has a table comprising a plurality of rows which include a time code, a check code, a location of related information, a path member, a location of geographic coordinates of a sender, a destination, and a version number. The piece of related information corresponds to the location of related information in the corresponding row.

In an embodiment, the piece of related information includes a voice message, a broadcast message, and a video message.

In an embodiment, if the piece of version information received by the other processing units is identical to the piece of version information of its own, the update process is not performed.

In an embodiment, if the piece of version information received by the other processing units is newer than the piece of version information of its own, the piece of version information and the piece of related information of its own are updated.

In an embodiment, the communication unit is a Bluetooth communication module, a WIFI communication module, or a near-field communication module.

In an embodiment, the processing unit is a micro control unit or a central processing unit.

In an embodiment, the processing unit can be connected to an external interface which is a micro projector, a photographic lens, a battery providing power, a memory device read and written by the processing unit, or a combination of the above.

### BRIEF DESCRIPTION OF DRAWING

FIG. 1 is a block diagram of an embodiment of the present invention;
FIG. 2 is another block diagram of an embodiment of the present invention;
FIG. 3 is a perspective view of an embodiment of the present invention in practice;
FIG. 4 is a block diagram of an embodiment of the present invention in practice; and
FIG. 5 is a schematic view of the piece of version information of an embodiment of the present invention.

### DETAILED DESCRIPTION OF THE INVENTION

The above objectives of the present invention and the features of structure and function of the present invention are described according to preferred embodiments in accompanying figures.

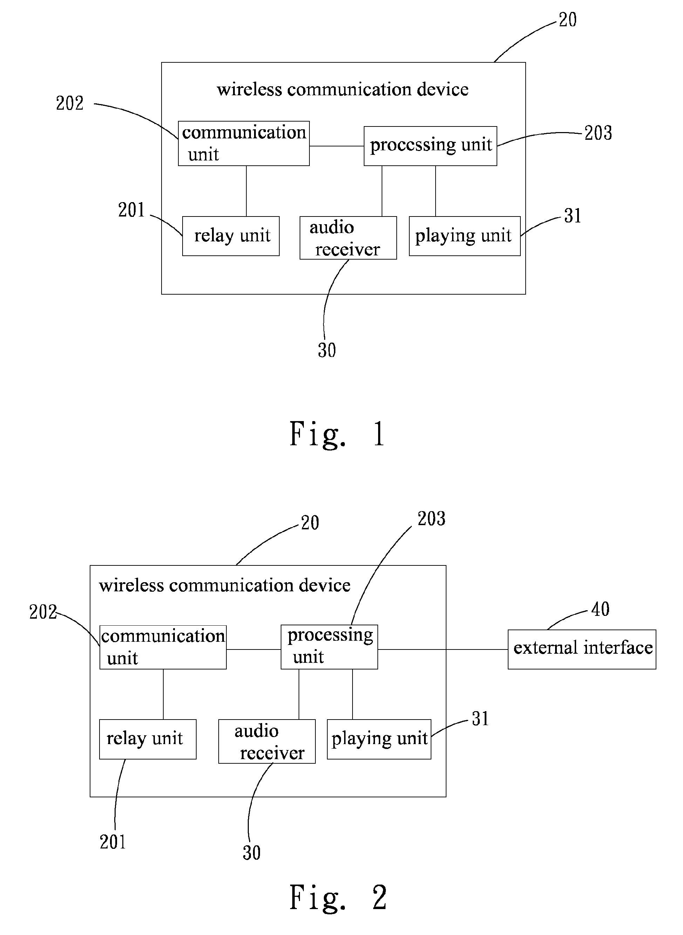

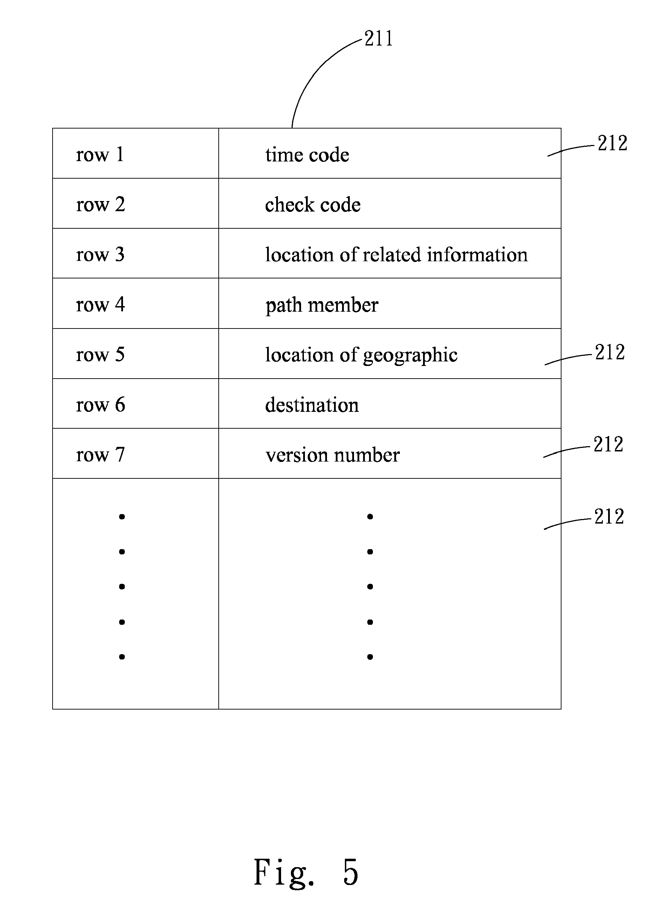

Please refer to FIGS. 1, 3, and 4, which are the block diagram of an embodiment of the present invention and the perspective view of an embodiment of the present invention in practice, respectively. Also, please refer to FIG. 5. The present invention provides a wireless communication system for helmets, which comprises a plurality of helmet bodies 10 and a plurality of wireless communication devices 20. In the current embodiment, three helmet bodies 10 are used as an example of the helmet bodies 10, but not limited to this. The wireless communication devices 20 are disposed on the helmet bodies 10; in the current embodiment, the number of the wireless communication devices 20 matches with that of the helmet bodies 10. That is, each helmet body 10 is provided with a wireless communication device 20 therein. Each of the wireless communication devices 20 has a relay unit 201, a communication unit 202, an audio receiver 30, a playing unit 31, and a processing unit 203. A Bluetooth communication module is used as an example of the communication unit 202 in the current embodiment, but not limited to this. In a practical embodiment, the communication unit 202 can be a WIFI communication module, a near-field communication (NFC) module, or one of other wireless communication modules. The communication unit 202 is connected to the processing unit 203 and the relay unit 201. The communication unit 202 receives and sends a communication request signal containing a piece of version information and a piece of related information through the relay unit 201.

The piece of version information mentioned above has a table 211 comprising a plurality of rows 212 which include a time code, a check code, a location of related information, a path member, a location of geographic coordinates of a sender (or a receiver), a destination, a version number, and other information such as a date code and device status. The piece of related information corresponds to the location of related information. In the current embodiment, the piece of the related information is a voice message and thus the location of related information contains the location of the voice message. That is, the corresponding voice message is recorded in the location of the voice message. However, in a practical embodiment of the present invention, the piece of related information is not limited to the above-mentioned voice message and can be a broadcast message or a video message (e.g., the video image or other photographed images except for the voice in the shared content). Further, the location of related information contains the location of the voice message recording the corresponding voice message, the location of the broadcast message recording the corresponding broadcast message, and the location of the video message recording the corresponding video message.

The relay units 201 are connected to each other in a wireless way and are used to enhance the received communication request signal to increase the sending (or transmission) distance of the communication request signal. In other words, the relay units 201 (or the repeaters) are used to increase the signal strength (or amplify) and thus transmit the signal farther to extend the communication range to further achieve the effects of long-distance transmission and communication. The processing unit 203 can be a micro control unit (MCU) or a central processing unit (CPU). The processing units 203 are individually connected to the corresponding audio receivers 30 and the corresponding playing units 31. The audio receiver 30 is a microphone in the current embodiment, which is disposed inside the chin shield in the front of helmet body 10 and corresponding to the user's mouth, to receive the user's voice message sent to the corresponding processing unit 203. The playing unit 31 is a speaker in the current embodiment, which is disposed on the right or left inner side of the helmet body 10 and corresponding to the user's ear, to play (or emit) the voice message of the piece of related information sent by the corresponding processing unit 203.

Therefore, the processing unit 203 of one of the wireless communication devices 20 (e.g., the wireless communication device 20 of the first helmet body 101) operates based on the received piece of related information containing the voice message and the corresponding piece of version information to generate the communication request signal sent to the corresponding communication unit 202 such that the communication unit 202 broadcasts and sends the communication request signal through the relay unit 201 to the other wireless communication devices 20 within a nearby communication range (that is, the relay unit 201 broadcasts the updated information). At this moment, the most nearby wireless communication device 20 (e.g., the wireless communication device 20 of the second helmet body 102) will broadcast the communication request signal just received through its own relay unit 201 to the wireless communication device 20 within the nearby communication range (e.g., the wireless communication device 20 of the third helmet body 103). As a result, the multihop transmission is achieved by one after another transmission within the communication range to deliver the information request signal to a broadcast object and each of the wireless communication devices 20 can recognize the broadcast object is a specific wireless communication device 20 or the whole of (or all of) the wireless communication devices based on the piece of version information of the received communication request signal.

Moreover, each of the processing units 203 of the wireless communication devices 20 within the nearby communication range compares the piece of version information of the received communication request signal with the piece of version information of its own to determine whether an update process is performed. For example, if the piece of version information received by the other processing units within the nearby communication range is compared to be identical to the piece of version information of their own, this means the piece of version information and the piece of related information of their own are the latest version and the update process is not required. Then, the processing unit 203 will generate a response signal (e.g., a response of "update is not required") and send it to the corresponding communication unit 202. Next, the relay unit 201 transmits the response signal back to the wireless communication device 20 which just sent the communication request signal. Meanwhile, the processing unit 203 transmits the received communication request signal to the corresponding communication unit 202 according to a preset time interval (e.g., 5 seconds) such that the communication unit 202 continues to transmit the received communication request signal to another nearby wireless communication device 20 through the relay unit 201. If each of the other processing units 203 within the nearby communication range compares (or checks) the version number of the received piece of version information with the version number of the piece of version information of its own to determine the former is newer than the latter, the piece of version information and the piece of related information of its own are required to be updated. Consequently, the processing unit 203 will updated the table of the piece of version information of its own to have the same version number as the piece of version information of the received communication request signal. Then, the newer voice message is recorded in the location of related information in the updated table. After the processing unit 203 performs the update process, the received communication request signal is sent to the communication unit 202 such that the communication unit 202 continues to broadcast the update information to a nearby wireless communication device 20 through the relay unit 201.

Besides, please refer to FIG. 2, an alternative embodiment. The above-mentioned processing unit 203 can be connected to an external interface 40 which is a micro projector, a photographic lens, a battery providing power, a memory device (e.g., Flash memory device) read and written by the processing unit 203, or a combination of the above. Therefore, if the processing unit 203 receives a video message captured by the photographic lens, the processing unit 203 operates to generate the communication request signal based on the received piece of related information containing a voice message and a video message, and the corresponding piece of version information and send the communication request signal to corresponding connected communication unit 202.

A practical embodiment is given below for explanation.

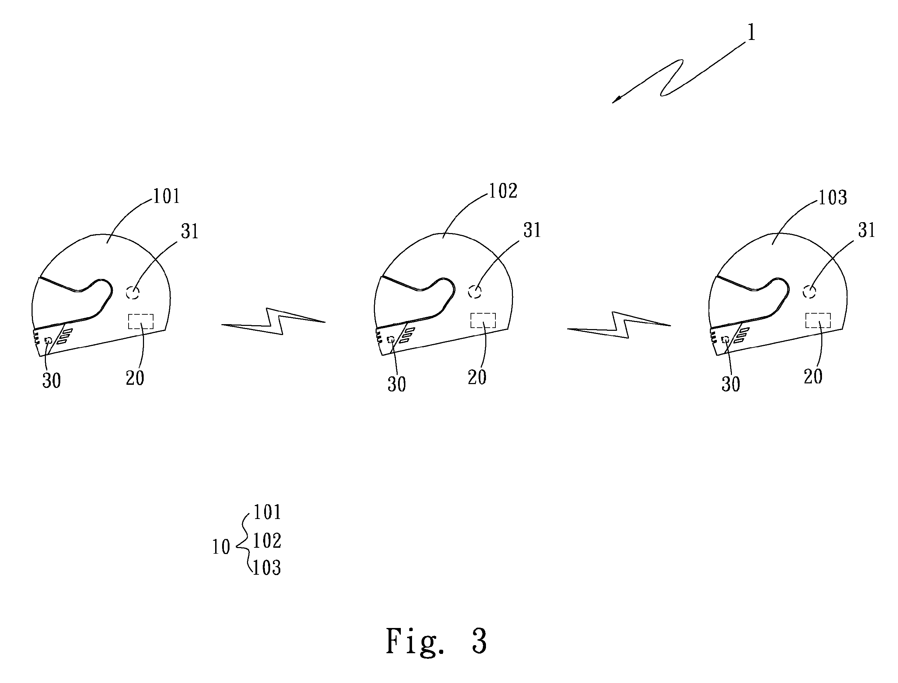

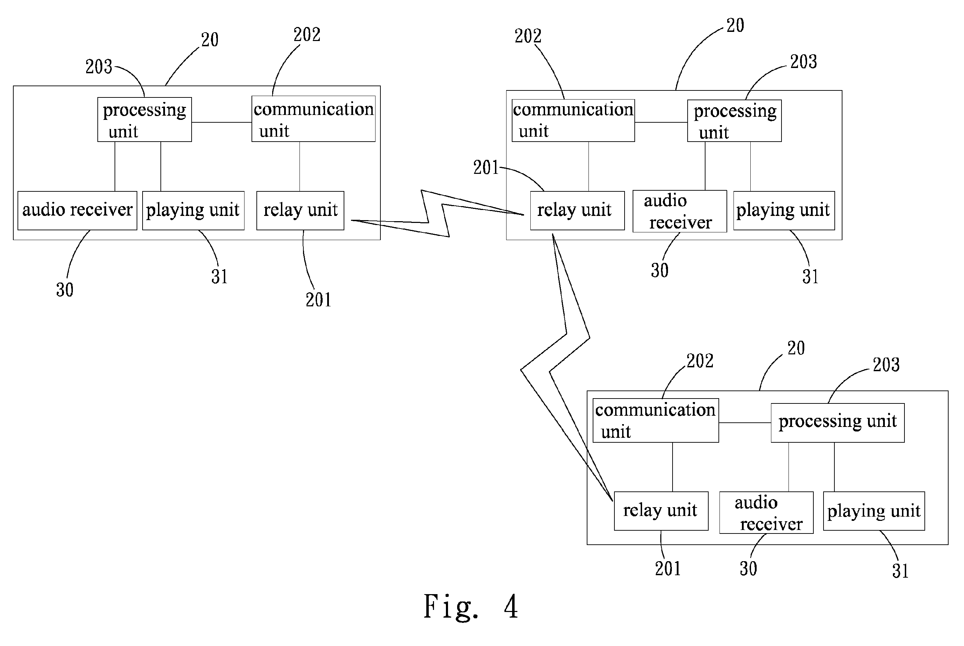

Please refer to FIGS. 3 and 4. When the first user wearing the first helmet body 101 would like to communicate with the third user wearing the third helmet body 103, the audio receiver 30 of the wireless communication device 20 on the first helmet body 101 receives a voice message of the first user and the processing unit 203 operates to generate a communication request signal based on the received voice message and the corresponding piece of version information. Then, the communication unit 202 sends the communication request signal through its own relay unit 201 to the relay unit 201 of the wireless communication device 20 on the second helmet body 102 within the communication rage can be reached. After the relay unit 201 of the second helmet body 102 responds to the relay unit 201 of the first helmet body 101 with connection permission, the relay unit 201 of the second helmet body 102 sends the received communication request signal to the processing unit 203 through the communication unit 202. After the above-mentioned processing unit 203 compares the piece of version information based on the received communication request signal to determine whether an update process is performed, the communication unit 202 sends the received communication request signal through its own relay unit 201 to the relay unit 201 of the wireless communication device 20 on the third helmet body 103 within the communication rage. After the relay unit 201 of the third helmet body 103 responds to the relay unit 201 of the second helmet body 102 with connection permission, the relay unit 201 of the third helmet body 103 sends the received communication request signal to the processing unit 203 through the communication unit 202. After the processing unit 203 compares the piece of version information based on the received communication request signal to determine whether an update process is performed, meanwhile, the broadcast object is recognized as the wireless communication device 20 of the third helmet body 103 itself such that the processing unit 203 plays the voice message in the piece of related information through its own playing unit 31 to let the third user wearing the third helmet body 103 be able to hear the voice message sent by the first user wearing the first helmet body 101. Moreover, in a practical embodiment, the third user wearing the third helmet body 103 can see the video message which is sent by the first user wearing the first helmet body 101 and projected by its own projector, or can see and hear the video message and voice message both sent by the user wearing the first helmet body 101 at the same time.

Therefore, by means of the wireless communication system for helmets 1 of the present invention, the effects of the long-distance communication and convenient communication for the user can be achieved.

## Claims

1. A wireless communication system for helmets (1), comprising:
a plurality of helmet bodies (10); and
a plurality of wireless communication devices (20) disposed on the helmet bodies (10), wherein each of the wireless communication devices (20) has a relay unit (201), a communication unit (202), and a processing unit (203), wherein the communication unit (202) is connected to the relay unit (201) and the processing unit (203), wherein the communication unit (202) receives and sends a communication request signal containing a piece of version information and a piece of related information through the relay unit (201), wherein one of the processing units (203) operates based on the received piece of related information and the corresponding piece of version information to generate the communication request signal sent to the corresponding communication unit (202), wherein each of the other processing units (203) compares the piece of version information of the received communication request signal sent by the one of the processing units (202) with the piece of version information of its own to determine whether an update process is performed and sends the received communication request signal to the corresponding connected communication unit (202),
wherein the relay unit (201) of one of the wireless communication devices (20) broadcasts the communication request signal using multihop transmission to a broadcast object through the relay units (201) of the other wireless communication devices (20) within a nearby communication range and recognizes the broadcast object is a specific wireless communication device (20) or the whole of the wireless communication devices (20) based on the piece of version information of the received communication request signal such that the broadcast object obtains the communication request signal.

2. The wireless communication system for helmets (1) according to claim 1, wherein the each of the wireless communication devices (20) further has an audio receiver (30) and a playing unit (31), wherein the processing units (203) are individually connected to the corresponding audio receivers (30) and the corresponding playing units (31), wherein the audio receiver (30) is used to receive a voice message and the playing unit (31) is used to play the voice message.

3. The wireless communication system for helmets (1) according to claim 2, wherein the piece of version information has a table (211) comprising a plurality of rows (212) which include a time code, a check code, a location of related information, a path member, a location of geographic coordinates of a sender, a destination, and a version number, wherein the piece of related information corresponds to the location of related information.

4. The wireless communication system for helmets (1) according to claim 1, wherein the piece of related information includes a voice message, a broadcast message, and a video message.

5. The wireless communication system for helmets (1) according to claim 3, wherein if the piece of version information received by the other processing units (203) is identical to the piece of version information of its own, the update process is not performed.

6. The wireless communication system for helmets (1) according to claim 3, wherein if the piece of version information received by the other processing units (203) is newer than the piece of version information of its own, the piece of version information of its own and the piece of related information are updated.

7. The wireless communication system for helmets according to claim 1, wherein the communication unit (202) is a Bluetooth communication module, a WIFI communication module, or a near-field communication module.

8. The wireless communication system for helmets (1) according to claim 1, wherein the processing unit (203) is a micro control unit or a central processing unit.

9. The wireless communication system for helmets (1) according to claim 1, wherein the processing unit (203) is connected to an external interface (40) which is a micro projector, a photographic lens, a battery providing power, a memory device read and written by the processing unit (203), or a combination of the above.
